# EUROPEAN PATENT SPECIFICATION

(11) **EP 1 758 754 B1**
(45) Date of publication and mention of the grant of the patent: **23.04.2008**
(21) Application number: 04736159.7
(22) Date of filing: 04.06.2004
(51) Int. Cl.: B60K 28/06, E05B 19/04, B60R 25/04

(54) **METHOD AND DEVICE FOR STARTING A CAR**
VERFAHREN UND VORRICHTUNG ZUM STARTEN EINES AUTOS
PROCEDE ET DISPOSITIF DE DEMARRAGE DE VOITURE

(43) Date of publication of application: 07.03.2007
(73) Proprietor: SAAB AUTOMOBILE AB, 461 80 Trollhättan (SE)
(72) Inventor: KARLSSON, Margareta, S-462 35 Vänersborg (SE)
(74) Representative: Lind, Urban Arvid Oskar
(86) International application number: PCT/SE2004/000869
(87) International publication number: WO 2005/118326

(56) References cited:
- WO-A-20/04078511
- WO-A1-96/32556
- WO-A1-20/04018249
- GB-A- 2 361 343
- US-A- 5 224 566
- US-A1- 2004 085 211

## Description

### Technical Field

The present invention relates to a system and method for starting.

### Background and Prior Art

Alco keys for cars are used to prevent people from driving a car while under the influence of alcohol.

The person who wants to start the car breathes into an analyzing unit, which determines the alcohol level, and the system will decide on the basis of the analysis of the breath whether to let the individual start the car. Several such analyzing units are known in the art.

Generally, such a key is installed in the car as a separate module, which may even be fitted after the car is ready. This is expensive and complicated.

US-A-2004 085 211 discloses a system for preventing access to a vehicle. The system includes a substance detector configured to detect a level of at least one substance ingested by a user and a blocking device in communication with the substance detector where the blocking device disables the operability of at least one key. The blocking device enables the operability of the key when the level of the substance is measured by the substance detector to be within a predetermined range. The system can also include an ignition disabling device for selectively enabling an ignition system when the level of the substance is measured by the substance detector to be within a predetermined range.

### Object of the Invention

Thus it is an object of the present invention to provide a method and a device for preventing drunk driving that are simpler and less expensive than the prior art.

### Summary of the Invention

This is achieved according to the present invention by the features of claims 1 and 3. Further advantageous embodiments are set forth in the dependent claims. Further, there is disclosed a key for controlling the immobiliser of a car, comprising an ignition device for starting the car and an analysis device for determining the alcohol level of a person and, transmission means arranged to transmit a start signal authorizing starting the car only if the alcohol level is below a predetermined limit level.

Further, there is disclosed a key for opening a car, comprising a transmitting means for transmitting wirelessly to the car an open signal to open at least one door of said car, said key comprising an analysis device for determining the alcohol level of a person and, in that the transmission means is arranged to transmit said open signal only if the alcohol level is below a predetermined limit level.

Further, there is disclosed a method for starting a car comprising an ignition system for starting the car, said ignition system being controlled by an immobiliser, said method comprising the steps of
- transmitting an open signal to open at least one door of the car
- operating the ignition key to start the car, said method comprising the steps of
- detecting the alcohol level of a person and, if the level is below a predetermined limit level, transmitting an ok signal wirelessly to the immobiliser to signal that it is ok to start the car,
- starting the car only if said ok signal has been received by the immobiliser.

The alcohol level of the person may be detected before or after opening the door. If it is detected before the door is opened the door may be controlled so that it is opened only after the ok signal has been received by the car. Alternatively, the person may be allowed to open the car, but not to start it, if the alcohol level is higher than the limit level.

Further, there is disclosed an immobiliser for controlling the ignition system of a car that can be started by means of an ignition device, said system being arranged to start the car when the ignition device is operated, wherein means are provided for receiving wirelessly an indication that it is permissible to start the car and for starting the car only if such an indication has been received, and an ignition system comprising such an immobiliser.

Also, there is disclosed a computer program product for controlling an immobiliser arranged to control the ignition system of a car, said computer program product being arranged to, when the ignition is operated in the usual way, determining whether or not a start signal authorizing ignition has been received on a wireless connection and allowing the car to be started only if the start signal has been received.

The computer program product may also be arranged to control the locks of a car, and to determine, when the locks are operated in the usual way, whether or not an open signal authorizing opening the car has been received on a wireless connection and allowing the car to be opened only if the start signal has been received.

According to the present invention, therefore, the car's own immobilisation system (immobiliser) is used to prevent the driver from opening and/or starting the car if the driver is under the influence of alcohol. In this case, the immobiliser is controlled in such a way as to require two different ok signals before the car is allowed to start. Thus, only a software modification is needed to provide the car with an alco key. The invention, therefore, minimizes the modifications needed of the car.

In the embodiment a first key is used for opening car and second key is used for determining alcohol level and activating ignition. In this way the person can be given access to the car without being allowed to start and drive the car. The first key is used for opening the door and for activating ignition and notifying the immobiliser of its presence. The second key is used for checking the alcohol level and confirming to the car's immobiliser that the alco key is ok for starting. Thereafter, when both the starting key and the alco key have been approved, the immobiliser will approve start.

The first and second keys may be integrated in one physical unit to avoid having to handle two different units.

In an alternative embodiment the same key for opening car and for determining the blood alcohol level and for starting the car.

Usually the key used for testing the alcohol level will be equipped with a device for analyzing the person's breath to determine the alcohol level. Such a device is often called a breathalyzer. Alternatively another means of determining the alcohol level may be used.

### Brief Description of the Drawings

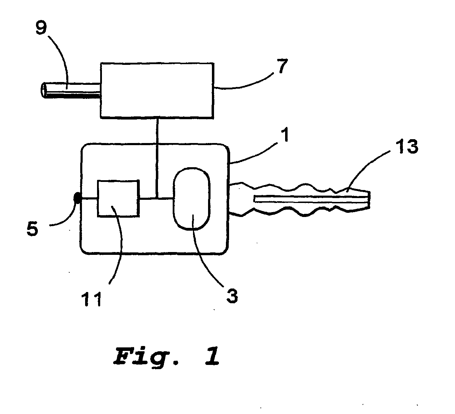

Fig. 1 illustrates one embodiment of a key according to the invention.

### Detailed Description of Embodiments

In a first, preferred embodiment, the driver will in any case be allowed to open the vehicle and enter it, but will be prevented from starting the vehicle. In this case, two keys are needed: a first key for opening the car, and a second key, preferably in combination with the first key, for starting it.

A person approaching his/her car uses the first key to open the car, usually by remote control as is common in the art. The person then inserts the first key into the ignition and turns it to start the car. The car will not start until the driver's alcohol level has been checked by means of the second key and the second key has transmitted an "ok" signal to the alco key that the alcohol level is acceptable. The acceptable level will be dependent on the laws in each country. The check by means of the second key can be performed before the car is opened, after the driver has entered the car, or even after the key has been turned in the ignition. If the driver tries to start the car without having checked the alcohol level, he may be prompted to do so, for example, by a signal on a display or by a voice message. The "ok" signal may be transmitted from the second key automatically as soon as the breath has been analyzed and determined to be ok, or a button may be pressed to send a signal from the second key after the analysis.

In this case, the car's immobiliser must be provided with a software module to prevent the car from starting before the "ok" signal has been received from the second key. Even though two keys are needed in this embodiment, they can be integrated in one physical unit. Thus, effectively one key may be used that is arranged to transmit at least two different signals to the car: one open signal to open the doors and one ok signal to authorize starting the car.

In a second embodiment, not part of the claims, the driver is not to be given access to the vehicle at all if the alcohol level is too high. In this case, only one key is needed. To open the car, the driver has to check his or her alcohol level using the key. Only if the alcohol level is acceptable will the key transmit the signal to the car to open the doors. The driver can then enter the car and start it. Alternatively, a second test may be required before the car will start.

In this case, the car must be provided with a software module that will only allow the doors to open if an "ok" signal has been received from the key to confirm that the alcohol level is acceptable. The car's immobiliser must be provided with a software module to prevent the car from starting before the "ok" signal has been received from the key. As in the previous embodiment, the "ok" signal may be transmitted automatically as soon as an analysis has shown that the alcohol level is acceptable, or a button on the key may have to be pressed for the "ok" signal to be transmitted.

In both the above embodiments, the key used to determine the alcohol level is preferably arranged to transmit an "ok" signal only if a test has been performed and the alcohol level has been determined to be acceptable. Alternatively, the key can be arranged to transmit an "ok" signal if the alcohol level has been determined to be acceptable, and a "not ok" signal if the alcohol level is too high. If a "not ok" signal is used, it could initiate a complete inhibition of the ignition.

Fig. 1 shows a car key 1 that has been modified for use according to one embodiment of the invention. As is common in the art, the key comprises a button 3 that would normally be used for initiating an open signal to be transmitted to the car, and a transmitting unit 5 for transmitting the open signal. In this case, the key comprises, or is connected to, an analysis device 7 for determining the alcohol level of a person. Typically, the analysis device 7 is arranged to do so by analyzing the breath of the person breathing into the analysis device through a breathing tube 9. The result is analyzed in a processing means 11 either in the analysis device 7 or in the key 1. If the result shows that the alcohol level was below the predetermined limit, the open signal is transmitted to the car from the transmitting unit 5. In this case the open signal may be used to trigger the opening of the doors, and/or to enable the ignition of the car to be performed in the usual way, as discussed above. Optionally, the key can also comprise a mechanical key portion 13, to be used when starting the car.

The general inventive idea could also be used for other types of access control. Instead of checking the blood alcohol level another condition used to determine if the driver is to be allowed to open and/or drive the car can be verified. Such a condition could be, for example the identity of the person, which can be verified by means of a camera, finger prints, iris scans or other biometrics. The result of this verification can be used to trigger an "ok" signal (and optionally a "not ok" signal) from the second key in a similar way as described above for alcohol level.

## Claims

1. A system for starting a car, the system comprising:
- a first key by means of which a door of the car is openable and an ignition of the car is operable,
- a second key and
- an immobiliser of the car receiving a notification of the presence of said first key inserted in said ignition and preventing the car from starting before an ok-signal has been received from said second key,
- the alcohol level of a driver of the car is determined by said second key and an ok-signal is transmitted from said second key to said immobiliser only if the alcohol level is below a predetermined level,
- wherein, when said second key has transmitted said ok-signal, said immobiliser permits said ignition to be operated in the usual way by means of the first key.

2. A system according to claim 1, wherein the immobiliser is controllable in such a way as to require two different ok-signals before the car is allowed to start.

3. A method for starting a car, the method comprising:
- opening a door of the car by means of a first key,
- operating an ignition of the car by means of the first key,
- providing a second key and an immobiliser of the car,
- said immobiliser receiving a notification of the presence of said first key inserted in said ignition and preventing the car from starting before an ok-signal has been received from said second key,
- determining by said second key the alcohol level of a driver of the car is and transmitting an ok-signal from said second key to said immobiliser only if the alcohol level is below a predetermined level,
- wherein, when said second key has transmitted said ok-signal, said immobiliser permits said ignition to be operated in the usual way by means of the first key.

4. A method according to claim 3, wherein the immobiliser is controlled in such a way as to require two different ok-signals before the car is allowed to start.

## Patentansprüche

1. System zum Starten eines Autos, wobei das System umfasst:
- einen ersten Schlüssel, durch den eine Tür des Autos geöffnet und eine Zündung des Autos betätigt werden kann,
- einen zweiten Schlüssel und
- eine Wegfahrsperre des Autos, die eine Meldung vom Vorhandensein des ersten Schlüssels empfängt, der in die Zündung eingeführt wurde, und die ein Starten des Autos verhindert, bevor ein OK-Signal von dem zweiten Schlüssel empfangen wurde,
- wobei der Alkoholspiegel eines Fahrers des Autos durch den zweiten Schlüssel bestimmt wird und ein OK-Signal von dem zweiten Schlüssel der Wegfahrsperre nur dann übermittelt wird, wenn der Alkoholspiegel unter einem vorgegebenen Wert liegt,
- wobei die Wegfahrsperre dann, wenn der zweite Schlüssel das OK-Signal übermittelt hat, ein Betätigen der Zündung auf die übliche Weise vermittels des ersten Schlüssels erlaubt.

2. System nach Anspruch 1, wobei die Wegfahrsperre derart steuerbar ist, dass zwei unterschiedliche OK-Signale benötigt werden, bevor ein Starten des Autos zugelassen wird.

3. Verfahren zum Starten eines Autos, wobei das System umfasst:
- Öffnen einer Tür des Autos durch einen ersten Schlüssel,
- Betätigen einer Zündung des Autos durch den ersten Schlüssel,
- Bereitstellen eines zweiten Schlüssels und einer Wegfahrsperre des Autos,
- wobei die Wegfahrsperre eine Meldung vom Vorhandensein des ersten Schlüssels empfängt, der in die Zündung eingeführt wurde, und ein Starten des Autos verhindert, bevor ein OK-Signal von dem zweiten Schlüssel empfangen wurde,
- wobei der Alkoholspiegel eines Fahrers des Autos durch den zweiten Schlüssel bestimmt und ein OK-Signal von dem zweiten Schlüssel der Wegfahrsperre nur dann übermittelt wird, wenn der Alkoholspiegel unter einem vorgegebenen Wert liegt,
- wobei die Wegfahrsperre dann, wenn der zweite Schlüssel das OK-Signal übermittelt hat, ein Betätigen der Zündung auf die übliche Weise vermittels des ersten Schlüssels erlaubt.

4. System nach Anspruch 3, wobei die Wegfahrsperre derart gesteuert wird, dass zwei unterschiedliche OK-Signale benötigt werden, bevor ein Starten des Autos zugelassen wird.

## Revendications

1. Système de démarrage d'une voiture, le système comprenant:
une première clé au moyen de laquelle une portière de la voiture peut s'ouvrir et un commutateur d'allumage de la voiture peut être actionné,
une deuxième clé et
un système d'immobilisation de la voiture recevant une notification concernant la présence de ladite première clé insérée dans ledit commutateur d'allumage et empêchant la voiture de démarrer avant qu'un signal de confirmation ne soit reçu à partir de ladite deuxième clé,
le niveau d'alcool d'un conducteur de la voiture est déterminé par ladite deuxième clé et un signal de confirmation est transmis à partir de ladite deuxième clé audit système d'immobilisation seulement si le niveau d'alcool est en dessous d'un niveau prédéterminé,
dans lequel, lorsque ladite deuxième clé a transmis ledit signal de confirmation, ledit système d'immobilisation permet audit commutateur d'allumage d'être actionné de la façon habituelle au moyen de la première clé.

2. Système selon la revendication 1, dans lequel le système d'immobilisation peut être commandé de manière à nécessiter deux signaux de confirmation distincts avant que la voiture ne soit habilitée à démarrer.

3. Procédé de démarrage d'une voiture, le procédé comprenant:
ouvrir une portière de la voiture au moyen d'une première clé,
actionner un commutateur allumage de la voiture au moyen de la première clé,
fournir une deuxième clé et un système d'immobilisation de la voiture,
ledit système d'immobilisation recevant une notification concernant la présence de ladite première clé insérée dans ledit système d'allumage et empêchant la voiture de démarrer avant qu'un signal de confirmation ne soit reçu à partir de ladite deuxième clé,
déterminer par ladite deuxième clé le niveau d'alcool d'un conducteur de la voiture et transmettre un signal de confirmation à partir de ladite deuxième clé audit système d'immobilisation seulement si le niveau d'alcool est en dessous d'un niveau prédéterminé,
dans lequel, lorsque ladite deuxième clé a transmis ledit signal de confirmation, ledit système d'immobilisation permet audit commutateur d'allumage d'être actionné de la façon habituelle au moyen de la première clé.

4. Procédé selon la revendication 3, dans lequel le système d'immobilisation est commandé de telle manière à nécessiter deux signaux de confirmation distincts avant que la voiture ne soit habilitée à démarrer.
